Europäisches Patentamt

European Patent Office

Office européen des brevets

(11) Publication number: **0 210 317**
**B1**

# EUROPEAN PATENT SPECIFICATION

(45) Date of publication of patent specification: **06.02.91**

(51) Int. Cl.⁵: **H 01 M 2/10, H 01 M 2/30**

(21) Application number: **85401930.4**

(22) Date of filing: **03.10.85**

(54) Electric accumulator battery.

(30) Priority: **22.07.85 ES 545458**

(43) Date of publication of application:
**04.02.87 Bulletin 87/06**

(45) Publication of the grant of the patent:
**06.02.91 Bulletin 91/06**

(84) Designated Contracting States:
**AT BE CH DE FR GB IT LI LU NL SE**

(56) References cited:
**DE-B-2 741 145**
**FR-A-2 233 719**
**GB-A-2 122 020**
**US-A-3 910 800**
**US-A-4 425 414**

(73) Proprietor: **SOCIEDAD ESPANOLA DEL ACUMULADOR TUDOR, S.A.**
**Condesa de Venadito, 1**
**E-28027 Madrid (ES)**

(72) Inventor: **Lopez-Doriga, Juan Antonio**
**Cea Bermùdez, 37**
**E-28003 Madrid (ES)**

(74) Representative: **Rodhain, Claude et al**
**Cabinet Claude Rodhain 30, rue la Boétie**
**F-75008 Paris (FR)**

The file contains technical information submitted after the application was filed and not included in this specification

Courier Press, Leamington Spa, England.

## Description

The present invention relates to improvements to electric accumulator batteries of a type comprising a case having a generally right prismatic shape, square or rectangular when seen from the top, closed at the upper part by a cover through which the connection terminals pass.

The improvements brought by the present invention relate more particularly to electric accumulator batteries of the lead-acid type which are more especially used as starter batteries for engines.

In batteries of the above mentioned type, the case is subdivided on the inside into two or more cells, in each of which are disposed alternating positive and negative electrodes as well as intermediate separators, which may be formed from microfibers of a mineral type forming a sort of fabric of variable thickness, or else from a synthetic compound, such for example as polyvinyl chloride. These separators may also consist of polyethylene cellulose paste plates, etc.

The cells of the accumulator contain essentially an electrolyte which may be completely absorbed by the separators or else remain in the free state.

The current conducting elements, formed by the plates or electrodes may be made from pure lead or lead-calcium-tin, lead-antimony-tin alloys or any other material able to form a strong, self supporting electrode which may be easily handled and bonded.

Because of the configuration of the case of the battery and because of the weight thereof which is due to the elements placed inside, lead electrodes and liquid electrolyte, handling of the battery is made difficult, and so there is a tendency to provide handles which are generally situated on the sides of the case. Such location of the handles makes it difficult to stack the batteries against each other during storage and transport.

Moreover, the traditional batteries do not comprise means for protecting the connection terminals and thus stacking of the batteries, during stockage and transport thereof, constitutes a dangerous operation because of the risk of damaging the terminals of the lower batteries.

Another problem arising with batteries of the above mentioned type is due to the position of their connection terminals. Depending on the structure or the design of motor vehicles, the batteries must be mounted thereon sometimes with the positive terminal at the right and sometimes at the left, which means that batteries must be provided with covers in both versions.

The patent U.S.—A—3,910,800 (C. GROBY et al) describes an electric accumulator battery of the type used as starter batteries for engines and comprising a case, having a generally right prismatic shape, closed at its upper part by a cover through which the connection terminals project, said case being internally subdivided into two or more cells in which the alternative positive and negative electrodes and the intermediate separators are housed, having two handles hinged to upstanding walls on the upper surface of said cover, said handles being symmetrical relatively to the center line of the cover, and being able to pivot between two endmost positions, i.e. a rest position in which they are folded back against the cover, in a coplanar position while defining an upper bearing platform situated above said terminals to enable various batteries to be stacked up, and a top working position in which the two handles are parallel and approximately perpendicular to the cover.

According to this document, the upstanding walls on the upper surface of said cover, whereto the two handles are mounted by means of hinges are in a central position on the cover.

These batteries are obtained having handles which when they are not used as such, may be folded back into an inactive position in which they do not interfere with the lateral stacking of the batteries against each other. In addition, the handles form a protective element for the connection terminals while defining at the same time a bearing surface for facilitating stacking of the batteries.

Otherwise, the patent US—A—4,425,414 (H. SOLOMON) discloses an accumulator battery comprising four terminals at the corners of the top side of the battery, connected together in pairs by adapters, which are positioned within the battery housing.

The object of the present invention is to provide a battery which presents a number of improvements and is provided with handles which, when they are not used as such, may be folded back into an inactive position and connection terminals disposed so as to be able to be adapted to any type of vehicle, whatever the arrangement of the positive and negative current terminals.

In accordance with the present invention, the cover has passing therethrough four terminals which are connected electrically together in pairs. Such connection is provided by two bridges which pass preferably below the cover. These terminals are preferably situated close to the corners of the cover, the two adjacent terminals of each of the small sides of the cover being of the same polarity.

Thus, whatever the position in which the battery is placed, it is possible to provide electric connections, positive and negative, indifferently on one side of the battery or on the other.

According to main aspect of the invention, said two walls are each placed parallel to an adjacent one of the longest sides of the right prismatic cover, said walls having at their central part symmetrical openings therein in which pivot pins are located, the ends of the handles being hingedly mounted by means of said pivots, the handles have their major surface parallel to the side walls of the battery at the ends at which they are hingedly mounted to the wall, but, in their folded-back position the major surface in the region adjacent the terminals is parallel to the battery cover, and the accumulator has four connection terminals, passing through the cover, which are connected two by two by means of electrically conducting bridges or bars running underneath said cover.

Preferably, the outside of the walls is provided with projections which support the under surface of the handles near the point where the planarity changes.

The handles adopt a "C" shape and have projecting pieces near to their free ends which constitute said pivot pins and are connected to the openings in said walls.

Moreover, the upper surface of the folded back handles is above the level of the terminals and also such surfaces provide a horizontal plane for supporting purposes.

The above mentioned characteristics and advantages will be more readily understood from the following description with reference to the accompanying drawings in which one possible embodiment has been shown by way of non limitative example.

In these drawings:

Figure 1 is a top view of a battery in accordance with the invention,

Figure 2 is an elevational view of the battery of Figure 1,

Figure 3 is an elevational view of the terminals of the same polarity which are connected together by means of a connection bar or bridge,

Figure 4 is a bottom view of the terminals of Figure 3, and

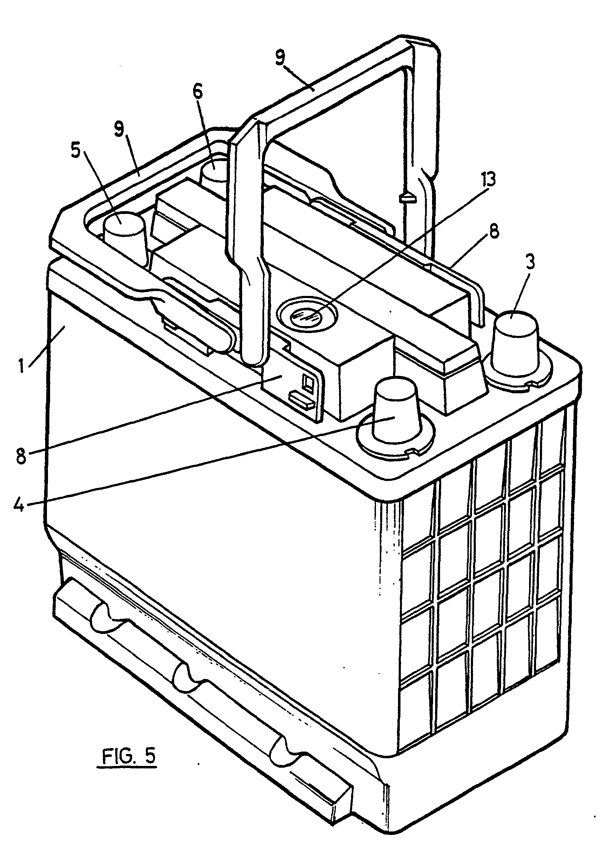

Figure 5 is a perspective view of a battery constructed in accordance with the present invention, having a handle in the working position and another in the stacking position.

As shown in the drawings, the battery comprises a case 1, having a rectangular right prismatic shape, closed at its upper part by a cover 2.

This cover, in accordance with the present invention, has passing therethrough four terminals designated by the reference numbers 3, 4, 5 and 6 which are situated close to the corners of cover 2.

Each of these terminals situated on a different lateral side, terminals 3 and 4 on one side and terminals 5 and 6 on the other are connected electrically together by means of a bar or bridge 7 made from the same material or alloy as the grids of the plates of the battery, one of these pairs of terminals being connected to the positive grid and the other pair of terminals to the negative grid. Thus, on both sides of the battery two terminals are provided, terminals 3 and 4 on the one side and terminals 5 and 6 on the opposite side, the two terminals of each of the pairs being of the same polarity so that the battery can be fitted in any position whatever the position of the positive and negative current connections of the vehicle on which the battery is installed.

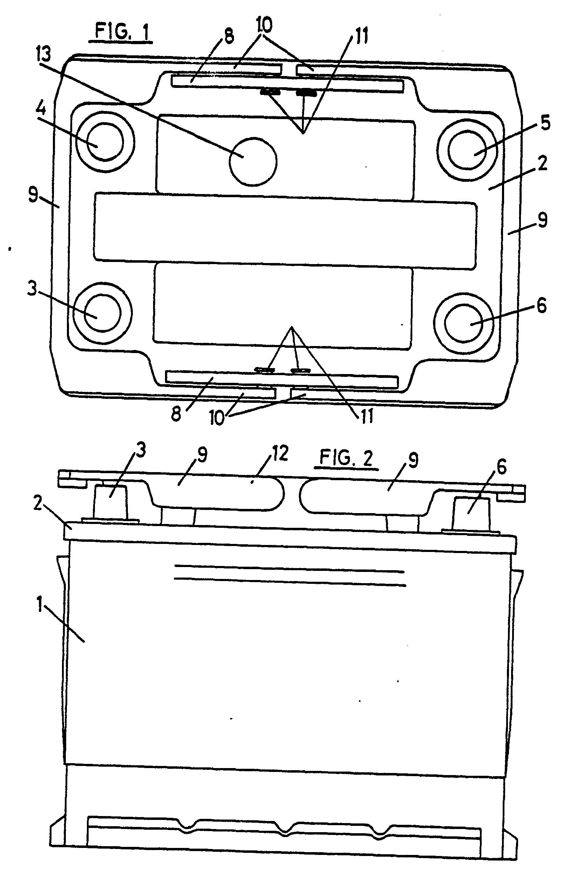

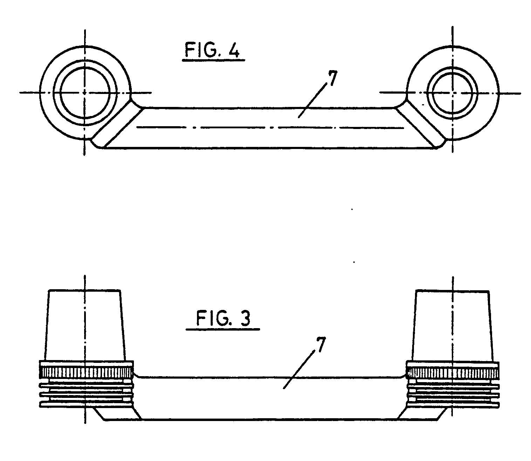

Figures 3 and 4 show two of the terminals of the same polarity connected together by means of the electric connection bar or bridge 7, situated below the cover 2 of the battery.

From cover 2 of the battery project outwardly two walls or flanges 8, each of which is placed parallel to and adjacent one of the large sides of cover 2. On these walls or flanges are hingedly mounted two equal handles 9 in the form of a C and connected by the end of their lateral legs 10 to walls 8 by means of pivots 11 which serve as pivot pins. The pivots which connect the ends of the legs of each handle are aligned, defining with the pivots of the two handles two axes parallel to each other and to cover 2.

In this configuration, the handles 9 may be disposed in a position folded back against cover 2, in which position they are shown in Figures 1 and 2, while defining a platform or upper bearing surface 12, Figure 2, which is situated above the connection terminals while serving as protective element therefor and further allowing the batteries to be stacked on each other. For this reason, the handles 9 have a lower most bearing position, in which they are in a coplanar situation, as shown in Figure 2. By raising handles 9, they may occupy a position substantially parallel and perpendicular to cover 2 so as to be used as handles for handling and transporting the batteries.

The battery of the invention may also be provided with an optical or electronic detector 13 for showing at all times the chage of the battery and the level of the electrolyte.

## Claims

1. An electric accumulator battery of the type used as starter batteries for engines and comprising a case, having a generally right prismatic shape, closed at its upper part by a cover through which the connection terminals project, said case being internally subdivided into two or more cells in which the alternative positive and negative electrodes and the intermediate separators are housed, having two handles hinged to upstanding walls (8) on the upper surface of said cover (2), said handles (9) being symmetrical relatively to the center line of the cover (2), and being able to pivot between two endmost positions, i.e. a rest position in which they are folded back against the cover (2), in a coplanar position while defining an upper bearing platform situated above said terminals to enable various batteries to be stacked up, and a top working position in which the two handles (9) are parallel and approximately perpendicular to the cover (2), characterized in that

a) said two walls (8) are each placed parallel to an adjacent one of the longest sides of the right prismatic cover,

b) said walls (8) having at their central part symmetrical openings therein in which pivot pins (11) are located, the ends of the handles (9) being hingedly mounted by means of said pivots (11)

c) the said handles have their major surface parallel to the side walls of the battery at the ends at which they are hingedly mounted to the wall, but, in their folded-back position the major surface in the region adjacent the terminals is parallel to the battery cover and,

d) the accumulator has four connection terminals (3, 4, 5, 6), passing through the cover (2), which are connected two by two by means of electronically conducting bridges or bars running underneath said cover (2).

2. An electric accumulator battery according to claim 1, characterized in that the outside of the walls (8) is provided with projections which support the under surface of the handles near the point where the planaritay changes.

3. An electric accumulator battery according to claim 1, characterized in that the handles (9) adopt a "C" shape and have projecting pieces (11) near to their free ends which constitute said pivot pins and are connected to the openings in said walls (8).

## Patentansprüche

1. Batterie zum Speichern von elektrischem Strom von der Art, wie sie als Anlasserbatterie für Motoren verwendet wird und ein Gehäuse von im wesentlichen rechtwinklig prismatischer Form aufweist, das im oberen Bereich mittels einer Abdeckung verschlossen ist, durch die Anschlußklemmen sich erstrecken, wobei das Gehäuseinnere in zwei oder mehrere Zellen unterteilt ist, in denen jeweils die alternativen positiven und negativen Elektroden und die Zwischentrennflächen umschlossen sind, wobei zwei Handgriffe an nach oben gerichteten Wänden (8) der Oberseite der Abdeckung (2) symmetrisch zur Mittellinie dieser Abdeckung angelenkt und zwischen zwei Endstellungen schwenkbar sind, d.h. zwischen einer Ruhestellung, in der sie rückwärts gegen die Abdeckung (2) geschwenkt sind und in koplanarer Position zu dieser eine obere Stützfläche oberhalb der Anschlußklemmen bilden, um mehrere Batterien aufeinander stapeln zu können und einer nach oben gerichteten Arbeitsstellung, in der beide Handgriffe (9) parallel und angenähert senkrecht zur Abdeckung (2) stehen, dadurch gekennzeichnet, daß

a) jede der beiden nach oben gerichteten Wände (8) parallel zur näheren der längeren Seiten der rechtwinklig prismatischen Abdeckung angeordnet ist,

b) die Wände (8) im mittleren Bereich symmetrische Öffnungen umschließen, in denen Schwenkzapfen (11) angeordnet sind, mittels der die Enden der Handgriffe (9) gelenkig gelagert sind,

c) die Handgriffe Hauptflächen haben, die an den Enden, an denen die Handgriffe an der jeweiligen Wand angelenkt sind, parallel zu den Seitenwänden der Batterie gerichtet sind, jedoch bei umgelegten Handgriffen im Bereich nahe den Anschlußklemmen parallel zur Batterieabdeckung liegen und

d) die Batterie vier Verbindungsklemmen (3, 4, 5, 6) aufweist, die durch die Abdeckung (2) hindurchgeführt sind paarweise durch elektrische Überbrückung oder elektrisch leitende Stangen unterhalb der Abdeckung (2) verbunden sind.

2. Batterie zum Speicher von elektrischem Strom nach Anspruch 1, dadurch gekennzeichnet, daß die Außenflächen der Wände (8) mit Vorsprüngen versehen sind, die die Handgriffe an deren Unterseiten nahe dem Versatz der Ebenen unterstützen.

3. Batterie zum Steuern von elektrischem Strom nach Anspruch 1, dadurch gekennzeichnet, daß die Handgriffe (9) die Form eines "C" haben und nahe ihren freien Enden Vorsprünge (11) aufweisen, die die Schwenkzapfen bilden und den Öffnungen in den Wänden (8) mit diesen zusammenwirkend zugeordnet sind.

## Revendications

1. Batterie-accumulateur électrique du type utilisé en tant que batteries de démarrage pour moteurs et comprenant un boîtier de forme prismatique sensiblement droite, fermé à sa partie supérieure par un couvercle au travers duquel font saillie les bornes de connexion, ledit boîtier étant à l'intérieur subdivisé en au moins deux cellules dans lesquelles sont logés les électrodes alternatives positive et négative et les séparateurs intermédiaires, ayant deux poignées articulées à des parois verticales (8) sur la surface supérieure dudit couvercle (2), lesdites poignées (9) étant symétriques par rapport à la ligne médiane du couvercle (2) et pouvant pivoter entre deux positions extrêmes, à savoir une position de repos dans laquelle elles sont repliées contre le couvercle (2), dans une position coplanaire où elles définissent une plate-forme supérieure de support située au-dessus desdites bornes pour permettre l'empilement de différentes batteries, et une position supérieure de travail dans laquelle les deux poignées (9) sont parallèles et approximativement perpendiculaires au couvercle (2), batterie caractérisé en ce que:

a — lesdites deux parois (8) sont chacune placées parallèlement à l'un des côtés les plus longs adjacent du couvercle prismatique droit,

b — lesdites parois (8) ont à leur partie centrale des ouvertures symétriques dans lesquelles sont logés des tenons de pivotement (11), les extrémités des poignées (9) étant montées de façon articulée au moyen desdits pivots (11),

c — lesdites poignées ont la majorité de leur surface parallèle aux parois latérales de la batterie aux extrémités desquelles elles sont montées de façon articulée à la paroi, mais, dans leur position repliée, la majorité de leur surface dans la zone adjacente aux bornes est parallèle au couvercle de la batterie et,

d — l'accumulateur a quatre bornes de connexion (3, 4, 5, 6) passant à travers le couvercle (2), qui sont connectées deux par deux au moyen de ponts ou barres conducteurs électriques s'étendant en dessous dudit couvercle (2).

2. Batterie-accumulateur électrique selon la revendication 1, caractérisée en ce que la face externe des parois (8) est pourvue de projections qui supportent la surface inférieure des poignées près du point où la planarité varie.

3. Batterie-accumulateur électrique selon la revendication 1, caractérisée en ce que les poignées (9) adoptent une forme en "C" et ont des pièces faisant saillie (11) à proximité de leurs extrémités libres qui constituant lesdits tenons de pivotement et sont connectées aux ouvertures dans lesdites parois (8).

FIG. 1

FIG. 2

FIG. 4

7

FIG. 3

7

FIG. 5